# EUROPEAN PATENT SPECIFICATION

(11) **EP 2 023 013 B1**
(45) Date of publication and mention of the grant of the patent: **08.04.2015**
(21) Application number: 08013957.9
(22) Date of filing: 04.08.2008
(51) Int. Cl.: F16H 39/36, F04C 14/18

(54) **Hydrostatic stepless toothed transmission**
Stufenlos gezahntes hydrostatisches Getriebe
Transmission dentée à variation continue hydrostatique

(30) Priority: 07.08.2007 PL 38310007
(43) Date of publication of application: 11.02.2009
(73) Proprietor: Wieckowski, Henryk, 94-007 Lodz (PL)
(72) Inventor: Wieckowski, Henryk, 94-007 Lodz (PL)
(74) Representative: Ciupinski, Zbigniew

(56) References cited:
- BE-A- 443 167
- DE-A1- 10 117 139
- DE-A1- 10 164 748
- DE-C- 759 938
- GB-A- 798 214

## Description

The subject of the invention is a hydrostatic, stepless toothed transmission.

Known from the patent application P 315748 A continuously variable hydrostatic transmission includes an input shaft connected to drive a hydraulic pump unit, a grounded hydraulic motor unit, and an output shaft. A wedge-shaped swashplate is pivotally mounted to the output shaft (16)in drivingcon nection to receive output torque resulting from the exchange of pressurized hydraulic fluid between the pump and motor units through specially configured ports in the swashplate. A hydraulically actuated ratio controller is pivotally linked to the swashplate to selectively adjust the swashplate angle relative to the output shaft axis and thereby change transmission ratio.

Known from the patent application P 316379 Hydrostatic transmissbn of continuously variable ratio, containing a controller for changing the ratio of a continuously variable hydrostatic transmission, as determined by the angular position of a swashplate; including an actuator having a cylinder slidingly receiving a piston to define a pair of chambers. A pair of solenoid valves, each configured to connect a respective chamber selectively to sump pump pressure or atmospheric pressure, are energized with a stream of pulses to create differential fluid pressures in the chambers, thereby producing movement of the piston; the piston movement being linked to the swashplate to produce a corresponding adjustment of the swashplate angular position. The rate of change of the swashplate angular position is controlled by pulse width modulating the pulse stream.

Known from the patent application P 316634 Hydrostatic transmission of continuously variable ratio; To control the transmission ratio of a continuously variable hydrostatic transmission including an input shaft, an output shaf" a pump unit driven by the input shaft, a grounded motor unit, and a wedge-shaped swashplate drivingly and pivotally connected to the output shaft in hydraulic fluid-communicating position between the pump and motor units, a ratio controller is provided having a hydraulically actuated piston incorporated internally of the output shaft. A pilot valve, also incorporated internally of the output shaft, operates to create differential fluid pressures at opposite end faces of the piston, forcing axial motion of the piston and ratio-changing pivotal movement of the swashplate linked to the piston.

Known from the patent application P 317329 A continuously variable hydrostatic transmission includes an input shaft connected to drive a hydraulic pump unit, a grounded hydraulic motor unit, and an output shaft. A wedge-shaped swashplate is pivotally mounted to the output shaft in driving connection to receive output torque resulting from the exchange of pressurized hydraulic fluid between the pump and motor units through ports in the swashplate. A hydraulically actuated ratio controller is pivotally linked to the swashplate to selectively adjust the swashplate angle relative to the output shaft axis and thereby change transmission ratio.

Known from the patent application P 317405 Hydrostatic transmission of continuously variable ratio includes wedge-shaped swashplate operatively positioned between a hydraulic pump unit driven by an input shaft and a grounded hydraulic motor unit to accommodate pumped exchanges of hydraulic fluid between the units. The swashplate, drivingly coupled to an output shaft, is angularly adjustable about a pivot axis oriented in intersecting, orthogonal relation to the output shaft axis to infinitely variable transmission ratios. Pilot bearings, mounted by the swashplate, support cylinder blocks of the hydraulic pump and motor units for nutating motions centered on the swashplate pivot axis to minimize the resultant moment on the swashplate. Piston rods in the hydraulic pump and motor units are oriented in outwardly flared, acute angles to the output shaft axis to expand the range of permissible angular adjustment of the swashplate by a ratio controller.

Known from the patent application BE-A-443167 Hydrostatic, stepless toothed transmission containing a toothed hydraulic pump of variable working volume and a toothed hydraulic engine of variable working volume, characteristic in that the toothed hydraulic pump is hydrostatically coupled with the toothed hydraulic engine and has an internal adjustment of the hydraulic pump efficiency capacity with the simultaneous adjustment of the hydraulic engine absorptivity.

The essence of the invention is a hydrostatic, stepless, toothed transmission containing of a toothed hydraulic pump of variable working volume and a toothed hydraulic engine of variable working volume, coupled hydraulically together and having an internal adjustment of the hydraulic pump efficiency with the simultaneous adjustment of the hydraulic engine absorptivity.

The entire transmission makes a single body, which contains a mutually blocked internal adjustment of the hydraulic pump efficiency and an internal adjustment of the hydraulic engine absorptivity, with the preservation of the beneficial, inversely-proportional ratio of efficiency to absorptivity, or other.

The internal adjustment of the toothed hydraulic pump efficiency and the internal adjustment of the toothed hydraulic engine absorptivity contain of pairs of meshed, embedded on shafts toothed gears, which on both sides are accompanied by systems of mutually coupled cylindrical casings, with the same external diameters equal to the external diameters of the gears, and having a common frontal plane from the gears' side. Every system of the double-casings has one casing that is rotary with respect to the other one, alternatingly. In the rotary casings there are internal gears which are reflections of the actual gears. The gears are permanently embedded on the drive shaft of the toothed hydraulic pump and on the receiving shaft of the toothed hydraulic engine. The toothed hydraulic pump and the toothed hydraulic engine have a common shaft, on which the gears are placed in a sliding manner allowing their free rotation. The gears both in the hydraulic tooted pump and in the hydraulic toothed engine are positioned in a way that allows them to immerse into the sockets being the internal gears. Hydrostatic stepless toothed transmission is characterised by each pair of casings is blocked together by a buckle.

The transmission unit consists of a hydraulic pump connected with a hydraulic engine in a combined system, within a single body. This ensures the free flow of the hydraulic liquid from the pump to the engine and vice versa. The connection between the pump and the engine is purely hydraulic. Because it is a closed circuit, the volume of the liquid is constant, and the transmission unit forms a monolithic body with two shafts coming out of its both sides. The suggested solution can multiply the rotation speed of the driving source from the nominal speed *N1ₙₒₘ* to the 5 times bigger *N2₅ₙₒₘ* in a completely stepless manner (there are no steps or sequences). Analogically the system can also convert the rotational speed to slower speeds than the nominal speed *N1ₙₒₘ* down to even 5 time slower *N2_{0.2nom}* The rotational speed of the driving shaft can also be changed in an optimal range, that is: from *0.5*N1ₙₒₘ* up to *1.5*N1ₙₒₘ*. For the nominal rotational speed: N1ₙₒₘ^{±50%} it is possible to achieve the rotational speed of the receiving shaft N2 in a range from zero ("0") to *0.2*N1ₙₒₘ*^{±*50%*} with an increasingly better coefficient of rigidity of transmission. If an external driving source changes its power or speed in a range of (±50%)*N1ₙₒₘ, the hydraulic transmission unit can adapt its efficiency, giving the best possible ratio or maintaining a constant rotational speed N2 in a range (from 0.2 to 5.0)*N1ₙₒₘ in the same time achieving a very good coefficient of rigidity of transmission N1/N2 at the level of 99%. The driving shaft (input) and the receiving shaft (output) are always in the same position, so there is no problem with adaptation to the external driving source or with the connection to the output device.

The invention allows the transmission unit to work both with low and relatively high internal pressures. This means, that the unit can be effectively sealed with standard seals. The adjustment of the speed is performed by the smoothly moving lever (manually) or semi-automatically (for example electromagnetically)

Potential benefits of the project are huge and include many applications. In an automotive industry the hydraulic stepless toothed transmission can be used in place of standard mechanical gearbox together with a clutch. Wind turbines are another application of the stepless transmission. Since the device can serve as a rigid connection between the turbine and the generator, it would no longer be a problem to ensure a constant speed of the generator independently of the wind speed. Other applications include the driving units for centrifuges, cranes, boats, mining combines, locomotives, tanks, helicopters, radar-bowl controllers and many more. The stepless transmission can be also used with an electrical engine as a gear reducer.

For low rotational speeds the transmission unit works similarly to the hydraulic actuator that achieves the torque M1 and M2 on the shafts W1 and W2, that results from a currently chosen transmission ratio, for arbitrary ratio.

The subject of the invention is shown in the picture, where:

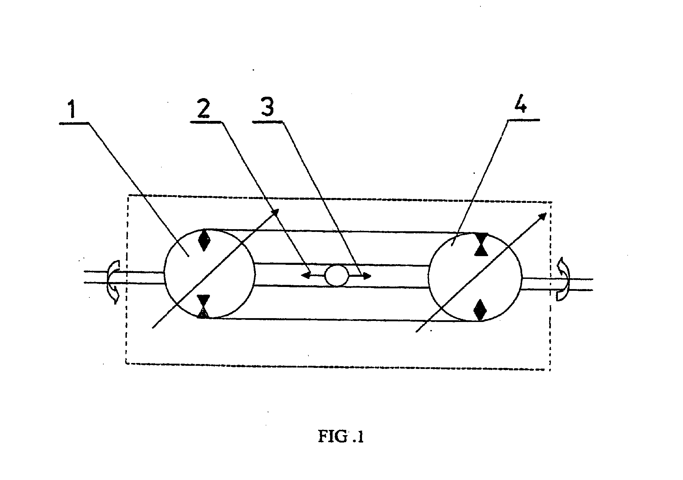

Fig. 1 - A schematic connection of the hydraulic toothed pump with the hydraulic toothed engine

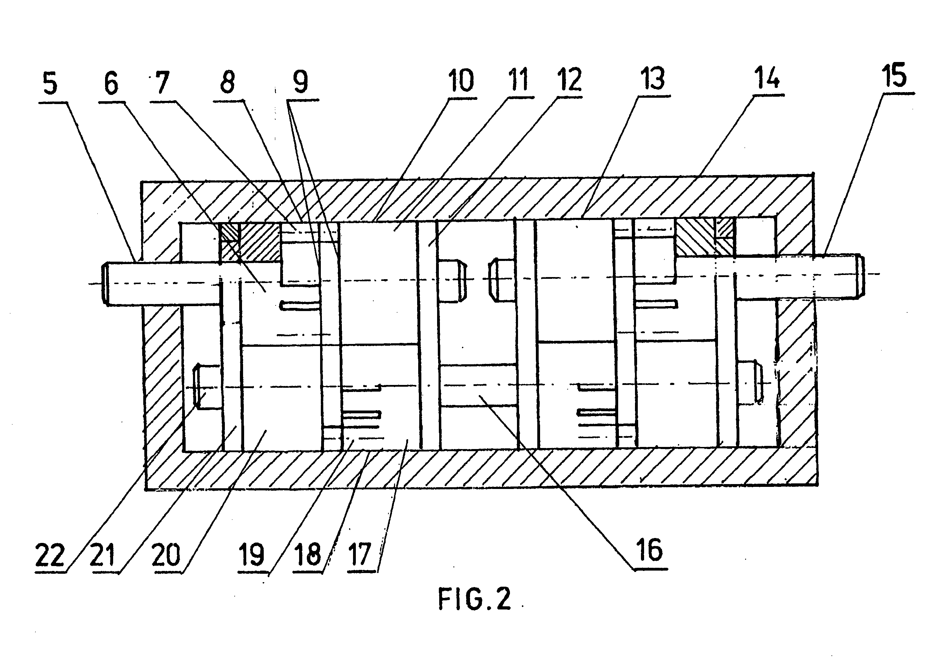

Fig. 2 - The hydraulic toothed transmission in a partial cross-section, in a schematic view.

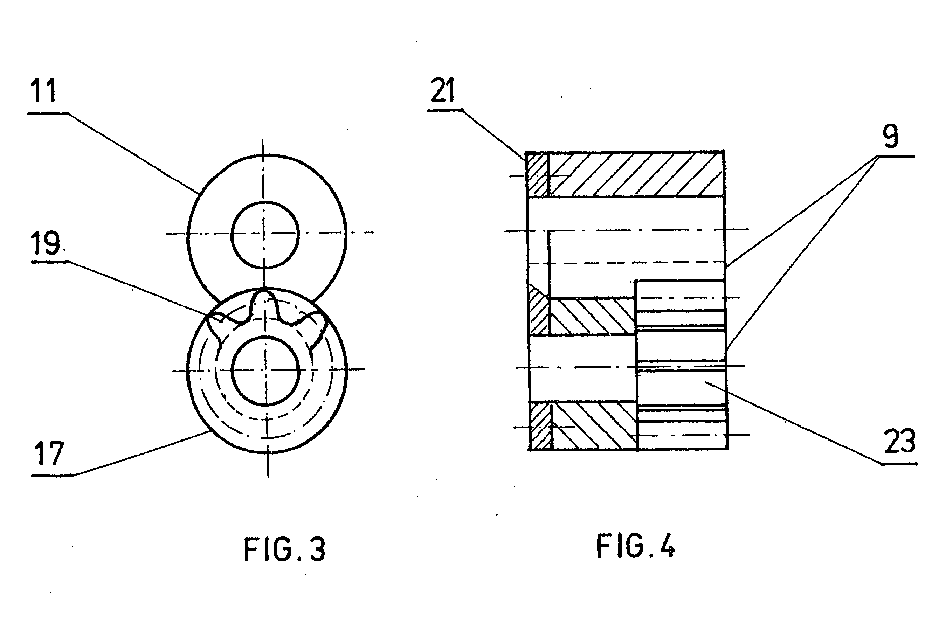

Fig. 3 - The top view of the blocked together casings couple.
Fig. 4 - The cross-section of the blocked together casings at the side view.

The subject of the invention shown in the example is a hydrostatic, stepless toothed transmission unit containing of a toothed hydraulic pump **1** of variable working volume and a toothed hydraulic engine **4** of variable working volume, coupled hydraulically together and having an internal adjustment of the hydraulic pump efficiency **2** with the simultaneous adjustment of the hydraulic engine absorptivity **3**.

The entire transmission unit makes a single body **14**, which contains a mutually blocked internal adjustment of the hydraulic pump efficiency **2** and an internal adjustment of the hydraulic engine absorptivity **3**, with the preservation of the inversely-proportional ratio of efficiency to absorptivity.

The internal adjustment of the toothed hydraulic pump efficiency **2** and the internal adjustment of the toothed hydraulic engine absorptivity **3** contain of pairs of meshed, embedded on shafts **5***,* **22** toothed gears **8**, **18**, which on both sides are accompanied by systems of mutually coupled cylindrical casings **6**, **20**, with the same external diameters equal to the internal diameters of the body **10** in the part where the pump is situated, and the internal diameters of the body **13**, in the part where the engine is situated, equal to the external radius of the gears **8,18**, and having a common frontal plane **9** from the gears' side. Every system of the double-casings **6**, **20** has one casing **6**, **17** that is rotary with respect to the other one **11, 20**, alternatingly. In the rotary casings there are internal gears **7**, **19** which are reflections of the actual gears **8**, **18.** The gears **8** are permanently embedded on the drive shaft **5** of the toothed hydraulic pump **1** and on the receiving shaft **15** of the toothed hydraulic engine **4**. The toothed hydraulic pump and the toothed hydraulic engine have a common, non-rotary shaft **16**, on which the gears **18** are placed in a sliding manner allowing their free rotation. Each pair of casings **6**, **20** is blocked together by a buckle **12**. The gears both in the hydraulic tooted pump and in the hydraulic toothed engine are positioned in a way that allows them to immerse into the sockets **23** being the internal gears **7**, **19**.

## Claims

1. Hydrostatic, stepless toothed transmission ensures the free flow of the hydraulic liquid from the pump to the engine and vice versa containing of a toothed hydraulic pump /1/ of variable working volume and a toothed hydraulic engine /4/ of variable working volume and the toothed hydraulic pump /1/ is coupled with the toothed hydraulic engine /4/ and has an internal adjustment of the hydraulic pump efficiency /2/ with the simultaneous adjustment of the hydraulic engine absorptivity /3/ and it makes a single body /14/, which contains a mutually blocked internal adjustment of the hydraulic pump efficiency /2/ and an internal adjustment of the hydraulic engine absorptivity /3/, with the preservation of the inversely-proportional ratio of efficiency to absorptivity and the internal adjustment of the toothed hydraulic pump efficiency /2/ and the internal adjustment of the toothed hydraulic engine absorptivity /3/ contain of pairs of meshed, embedded on shafts /5/, /22/ toothed gears /8/, /18/ and the gears are permanently embedded on the drive shaft /5/ of the toothed hydraulic pump /1/ and on the receiving shaft /15/ of the toothed hydraulic engine /4/ and the toothed hydraulic pump /1/ and the toothed hydraulic engine /4/ have a common, non-rotary shaft /16/ on which the gears /18/ are placed in a manner allowing their free rotation distinctive because of the fact that on both sides of shafts /5/, /22/ are accompanied by systems of mutually coupled cylindrical casings /6/, /20/, with the same external diameters equal to the external radius of the gears / 8 /, /18 /, and having a common frontal plane /9/ from the gears' side and every system of the double-casings /6/, /20/has one casing /6/, /17/that is rotary with respect to the other one /11/, /20/, alternatingly and in the rotary casings there are internal gears /7/, /19/ and the meshed gears /8/, /18/ both in the hydraulic toothed pump /1/ and hydraulic toothed engine /4/ are placed in a manner allowing them to slide along the shaft in a way that allows them to immerse into the sockets /23/ being the internal gears /7/, /19/, which are reflections of the actual gears /8/, /18/ ***characterised by*** the pair of casings /6/, /20/ is blocked together by a buckle /21/ and the pair of casings /11/, /17/ is blocked together by a buckle /12/.

## Patentansprüche

1. Das stufenlose hydrostatische Zahnradgetriebe, das einen freien Durchfluss der Druckflüssigkeit aus der Pumpe zu dem Motor und umgekehrt ermöglicht, bestehend aus einer hydraulischen Zahnradpumpe /**1**/ mit dem variablen Betriebsvolumen sowie einem hydraulischen Zahnrad-Hydraulikmotor /**4**/ mit dem variablen Betriebsvolumen, wobei die hydraulische Zahnradumpe /**1**/ mit dem Zahnrad-Hydraulikmotor /**4**/ gekoppelt ist. Das Getriebe besitzt eine interne Regelung der Fördermenge der hydraulischen Pumpe /2/ mit einer gleichzeitigen Regelung der Schluckmenge des Hydraulikmotors /3/ sowie es bildet das einzelne Gehäuse /14/, das eine miteinander verbundene interne Regelung der Fördermenge der hydraulischen Pumpe /2/ und eine interne Regelung der Schluckmenge des Hydraulikmotors /3/ mit Erhaltung des umgekehrt proportionalen Verhältnisses der Fördermenge zur Schluckmenge enthält, sowie die interne Regelung der Fördermenge der hydraulischen Zahnradpumpe /2/ und die interne Regelung der Schluckmenge des Zahnrad-Hydraulikmotors **/3/** enthalten die Paaren der verzahnten, auf die Wellen **/5/, /22/** angebrachten Zahnräder **/8/, /18/** und die Zahnräder sind auf der Antriebswelle **/5/** der gezahnten hydraulischen Pumpe **/1/** sowie auf der Abtriebswelle **/15/** des gezahnten Hydraulikmotors **/4/** fest gesetzt und die gezahnte hydraulische Pumpe **/1/** sowie der gezahnte Hydraulikmotor **/4/** haben eine gemeinsame, nicht rotierende Welle **/16/,** auf der die Zahnräder **/18/** verschiebbar angebracht sind so dass diese Zahnräder frei sich drehen können und die Wellen **/5/, /22/** beiderseitig durch die Gruppen von miteinander verbundenen zylindrischen Gehäuse **/6/, /20/** umgegeben sind und diese Gehäuse gleiche Außendurchmesser haben, die gleich dem Außenradius der Zahnräder **/8/**, **/18/** sind und sie haben eine gemeinsame Frontebene **/9/** von der Seite der Zahnräder und jede Gruppe der Doppelgehäuse **/6/, /20/** hat abwechselnd ein Drehgehäuse **/6/, /17/** gegenüber dem zweiten Gehäuse **/11/,** /**20**/ und in den Drehgehäusen befinden sich innere Verzahnungen /**7**/, /**19**/ und die verzahnten Zahnräder /**8**/, /**18**/, sowohl in der hydraulischen Zahnradpumpe /**1**/ als auch im hydraulischen Zahnrad-Hydraulikmotor /**4**/, längs der Welle verschiebbar angebracht sind, um ihnen ein Tauchen in den Nestern /**23**/ der Innenverzahnungen /**7**/, /**19**/ zu ermöglichen und die Innenverzahnungen sind eine Abbildung der eigentlichen Zahnräder /**8**/, /**18**/ **dadurch gekennzeichnet, dass** das Paar der Gehäuse /**6**/, /**20**/ mit einer Klammer /**21**/ verbunden ist und das Paar der Gehäuse /**11**/, /**17**/ mit einer Klammer /**12**/ verbunden ist.

## Revendications

1. Hydrostatique, la transmission continue de l'engrenage assure le libre écoulement du fluide hydraulique de la pompe vers le moteur, et vice versa, comprend une pompe à engrenage hydraulique / 1 / de volume de travail variable et de moteur à engrenage hydraulique / 4 / de volume de travail variable et de pompe à engrenage hydraulique / 1 / est joint avec le moteur à engrenage hydraulique/ 4 / et a un ajustement interne de l'efficacité de la pompe hydraulique / 2 / avec le réglage simultané de la capacité d'absorption du moteur hydraulique / 3 / et forme un ensemble commun / 14 /, qui contient un réglage interne mutuellement bloqué de l'efficacité de la pompe hydraulique / 2 / et un ajustement interne de la capacité d'absorption du moteur hydraulique / 3 /,avec le maintien du rapport inversement proportionnel entre l'efficacité et l'absorptivité anisi que l'ajustement interne de l'efficacité de la pompe à engrenage hydraulique. / 2 / et l'ajustement interne de la capacité d'absorption du moteur à engrenage hydraulique / 3 / contient des paires de mailles, fixées sur des rouleaux / 5 /, / 22 / des roues dentées / 8 /, / 18 / et les roues dentées intégrées de façon permanente sur les rouleaux propulseurs / 5 / la pompe à engrenage hydraulique / 1 / et sur le rouleau de réception / 15 / du moteur à engrenage hydraulique / 4 / et la pompe à engrenage hydraulique / 1 / et le moteur à engrenage hydraulique / 4 / ont un même, immobile rouleau / 16 / sur lequel les roues dentées sont placées / 18 / de manière à permettre leur rotation libre et distinctif en raison du fait que des deux côtés des rouleaux / 5 /, / 22 / sont entourées par des systèmes d'enveloppes externes cylindriques interconnectées / 6 /, / 20 /, ayant les mêmes diamètres extérieurs égaux au rayon externe de l'engrenage / 8 /, / 18 / et ayant un plan frontal commun / 9 / à partir du côté des roues dentées et chaque système de double-enveloppes / 6 /, / 20 / a une enveloppe / 6 /, / 17 / qui est respectivement rotative par rapport à l'autre / 11 /, / 20 / en alternance et dans les boîtiers rotatifs il y a des engrenages internes / 7 /, / 19 / et les engrenages maillés / 8 /, / 18 / les deux à la pompe à engrenage hydraulique / 1 / et du moteur à engrenage hydraulique / 4 / sont placés d'une manière leur permettant de glisser le long du rouleau de manière à plonger dans les douilles / 23 / étant les engrenages internes / 7 /, / 19 /, qui sont des réflexions des engrenages réelles / 8 /, / 18 /, **caractérisé par** la paire de boîtiers / 6 /, / 20 / est bloquée entre eux par une boucle / 21 / et la paire de boîtiers / 11 /, / 17 / est bloquée ensemble par une boucle / 12 /.
